Europäisches Patentamt

European Patent Office

Office européen des brevets

(19)

(11) Publication number: **0 078 809**

**B1**

(12) EUROPEAN PATENT SPECIFICATION

(45) Date of publication of patent specification: **11.10.89**

(51) Int. Cl.⁴: **G 06 K 11/06**, G 08 C 19/36

(21) Application number: **82900873.9**

(22) Date of filing: **03.02.82**

(88) International application number:
**PCT/US82/00146**

(87) International publication number:
**WO 82/04151 25.11.82 Gazette 82/28**

(54) ELECTRO-OPTICAL MOUSE.

(30) Priority: **18.05.81 US 264478**
**15.06.81 US 273641**

(43) Date of publication of application:
**18.05.83 Bulletin 83/20**

(45) Publication of the grant of the patent:
**11.10.89 Bulletin 89/41**

(84) Designated Contracting States:
**DE FR GB**

(56) References cited:
**GB-A-1 376 742**
**JP-A-54 126 426**
**US-A-3 297 879**
**US-A-3 541 521**
**US-A-3 825 746**
**US-A-4 303 914**
**US-A-4 306 147**

**PATENTS ABSTRACTS OF JAPAN, vol. 5, no.**
**175 (P-88)847r, 11th November 1981; & JP - A -**
**56 105 568 (TOKYO SHIBAURA DENKI K.K.)**
**22-08-1981**

(73) Proprietor: **KIRSCH, Steven T.**
**4960 Oakdale Avenue**
**Woodland Hills, CA 91364 (US)**

(72) Inventor: **KIRSCH, Steven T.**
**4960 Oakdale Avenue**
**Woodland Hills, CA 91364 (US)**

(74) Representative: **Ellis, Edward Lovell et al**
**Barlow, Gillet & Percival 94 Market Street**
**Manchester M1 1PJ (GB)**

Courier Press, Leamington Spa, England.

## Description

### Technical field

A mouse is a pointing device, typically for use with visual display systems in which a transducer converts translational motion of a housing relative to a surface into a position signal for controlling movement of a cursor or the like associated with a visual display system or a servo controlled object. More particularly, the present invention relates to such a system in which the transducer is electronic and movement of the housing relative to the surface is sensed by electromagnetic energy transmitted from and received by the transducer.

### Background art

A mouse must be distinguished from other cursor control systems, such as light pens and interactive tablets. These are devices in which electrical or electromagnetic energy is communicated from an active surface, grid or the like to energy receptors within a wand or other movable member. On the other hand, a mouse moves over a passive surface, such as a sheet of paper, or the like.

A mouse must also be distinguished from a joy stick control. A joy stick includes a lever, usually connected to a bearing. As the lever is moved, the bearing rotates correspondingly. Bearing motion may be sensed by potentiometers corresponding to different directions of bearing rotation. The output signal from a joy stick may be used for the same purpose as the output signal from a mouse. Both may be used to control a cursor. The distinguishing feature of a mouse is that two-dimensional motion over a surface corresponds directly with two-dimensional motion of a cursor in a graphic display.

A mouse should also be distinguished from bar code systems. In those systems, bar code is applied to a surface for indicating data, such as type of merchandise, price and manufacturer. The bar code typically produces an analog signal which may be read optically or magnetically. In U.S. patent 4,245,152 to Flurry et al., an ETAB (every transition a bit) code is described. Such systems do not yield directional information, as mice do.

Most of the mice of the prior art are mechanical systems involving wheels or rollers which maintain frictional contact with a surface. For example, U.S. Patent 3,541,541 to D. Engelbart shows a well-known and widely accepted mechanical mouse. There are certain mechanical problems which are inherent with these mice, such as the problems in maintaining good frictional contact with a surface. If a mechanical mouse encounters a slippery portion of a surface, the resulting output signal will be inaccurate.

Mechanical mice use a relatively large number of close tolerance parts and are difficult to make in mass production. Moreover, mechanical mice are subject to mechanical "noise", such as lash and vibration, and require frequent cleaning.

Non-mechanical mice which rely on electromagnetic energy transmitted to and radiated back from a surface in order to translate positional motion relative to the surface into an electrical signal for control of a cursor or similar device have already been proposed in British Patent Specification No. 1,376,742 and Japanese Patent Specification No. 126,426/79.

British Patent Specification No. 1,376,742 relates to position resolvers, which comprise two groups of crossing co-ordinate representative optically detectable strips, a member movable over the strips, and electro-optical means for producing for each of the groups, signals representative of both the movement and the direction of movement of the member across strips.

Japanese Patent Specification No. 126,426/79 relates to tablet input apparatus. The disclosure utilizes two different types of sensors, optical (Fig. 2) and magnetic (Fig. 4). The embodiment of Fig. 6 uses two optical detectors, which are spaced apart in order to observe orthogonal lines which are spaced apart. It thus detects motion in two perpendicular directions using a single line pattern.

One advantage of these two prior disclosures over mechanical mice is that there are no moving parts to break, wear, or malfunction. Another advantage is that there is little or no mechanical noise and little or no inherent electrical noise.

However, in the embodiment shown in Fig. 4 of British Patent Specification No. 1,376,742, the base member is provided with two groups of orthogonal reflective strips. Each strip of the horizontal group is formed by two adjacent reflective stripes respectively reflecting only green and red light. Each strip of the vertical group is formed by two adjacent reflective stripes respectively reflecting only blue and green light. Pairs of horizontal and vertical stripes effectively enclose a blank rectangle. The four squares at the corner of this rectangle, which provide the three colours, only occupy a small percentage area of the surface. Thus, it will be appreciated that only the stripes are important and the rectangular spaces between them serve no useful purpose in measuring relative motion. Moreover, using three colours, it is necessary to provide three detectors, which complicates the whole system and adds to the expense of the equipment.

It is therefore an object of the present invention to provide a non-mechanical mouse which is of a simpler construction and is therefore less expensive to manufacture than those previously proposed, and also to provide a relative motion sensory system, which such a mouse moves over a surface which is simpler and more effective than previously proposed.

According to the present invention there is provided a relative motion sensing system of the type having a surface, with a pattern of intersecting passive position-related lines thereon, and a member movable over the surface, said surface having thereon a first group of parallel lines which reflect one colour and absorb a second colour and a second group of parallel lines which reflect the second colour and absorb the first colour; a detector means housed in the movable member and comprising light source means directed at the surface, emitting light of said first and second colours, and light detector means positioned for receiving light reflected from the surface, the detector having a plurality of detector cells and producing electrical output signals representing reflection from lines in said first and second groups of lines; and counter means for counting said electrical output signals; characterised in that said first group of lines includes spaced apart lines of the first colour orthogonally intersected by spaced apart lines of the second colour constituting said second group, the spacing of said lines in said first and second groups being equal to the width of said lines, such that intersections of the lines, intersections of the spaces with the lines and remaining spaces are all optically contrasting horizontally and vertically adjacent squares of identical dimensions formed on said surface in order to form a repetitive pattern, the pattern repeating after crossing two squares in either the horizontal or vertical direction; and in that at least two detector cells are provided in order to detect relative motion in each direction.

The present invention will now be described in greater detail by way of examples with reference to the accompanying drawings, wherein:—

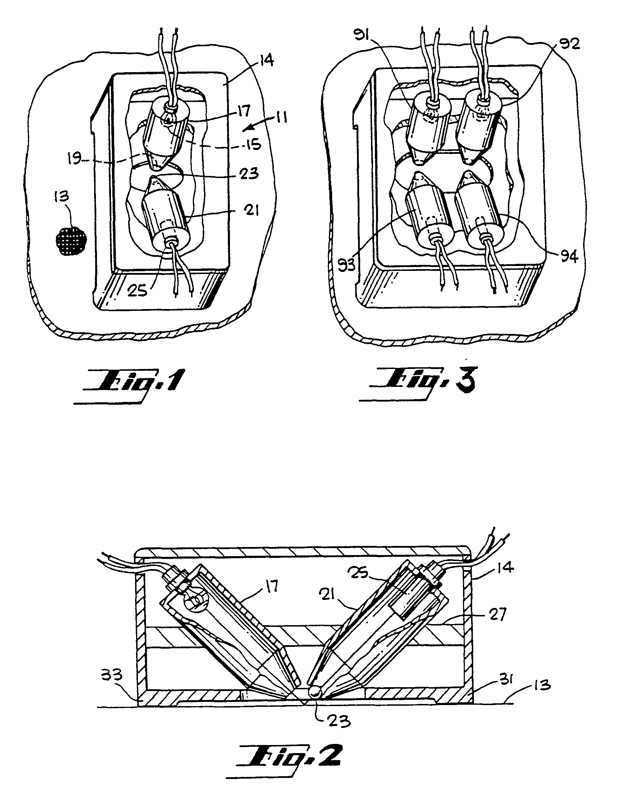

Fig. 1 is a perspective plan view of a detector and a cooperating surface having an indicia pattern in accord with the present invention for sensing relative motion with respect to the surface;

Fig. 2 is a cross-section of the detector shown in Fig. 1;

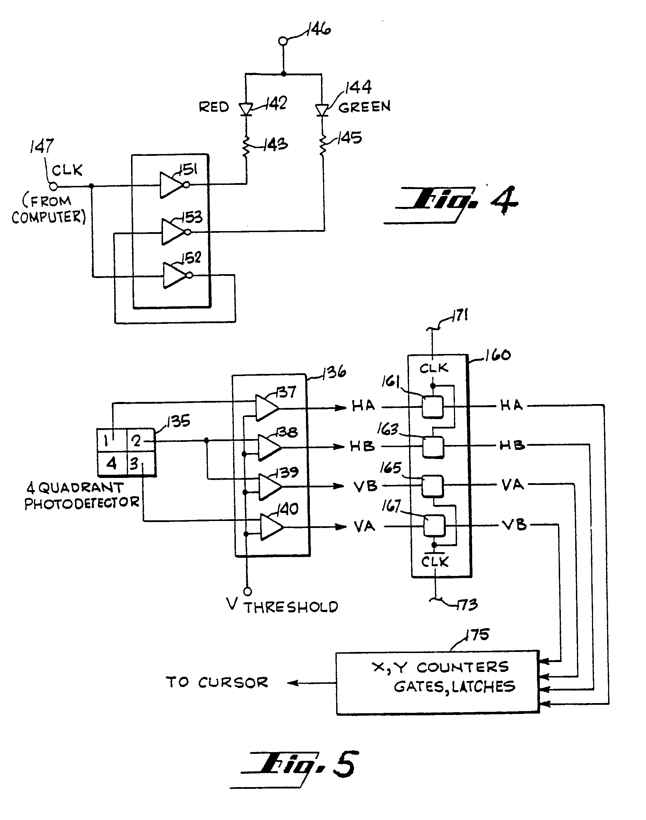

Fig. 3 is a perspective plan view of a dual detector mouse for sensing rotation, as well as translation;

Fig. 4 is an electrical diagram of a circuit for activating the dual colour source of a detector;

Fig. 5 is an electrical diagram of a circuit used with a four-quadrant detector;

Fig. 6 is a plan view of a portion of a grid pattern for use in an embodiment of the sensing system;

Figs. 7 and 8 show time gated detector reception and decoding plans for a two-cell detector;

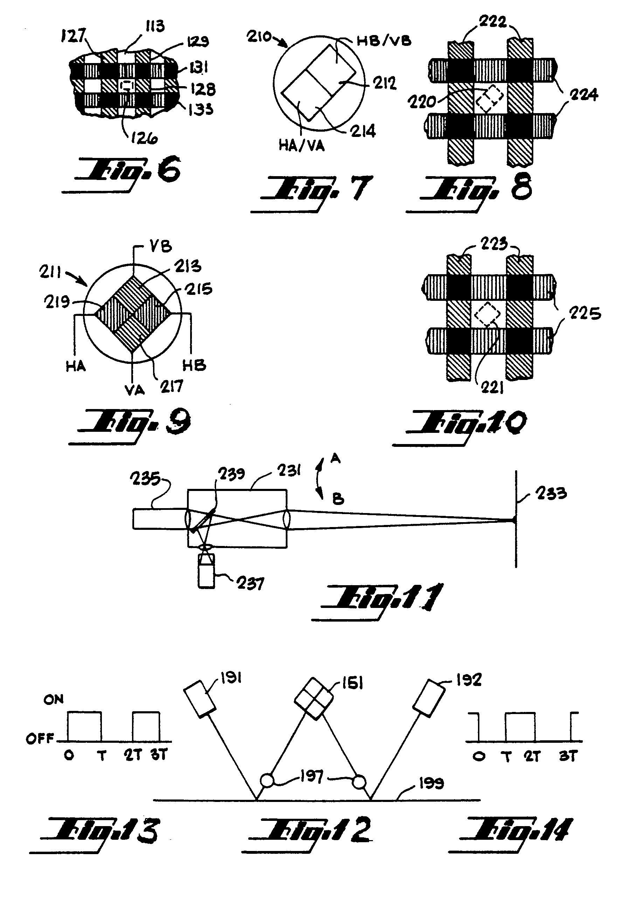

Figs. 9 and 10 show a steady state detector reception and decoding plans for a four-cell detector;

Fig. 11 is a plan view of a detector remotely located relative to a cooperating surface;

Fig. 12 is a plan view of an alternate version of a mouse for sensing rotation, as well as translation using a single detector;

Figs. 13 and 14 are timing diagrams for the light sources used in the plan of Fig. 13;

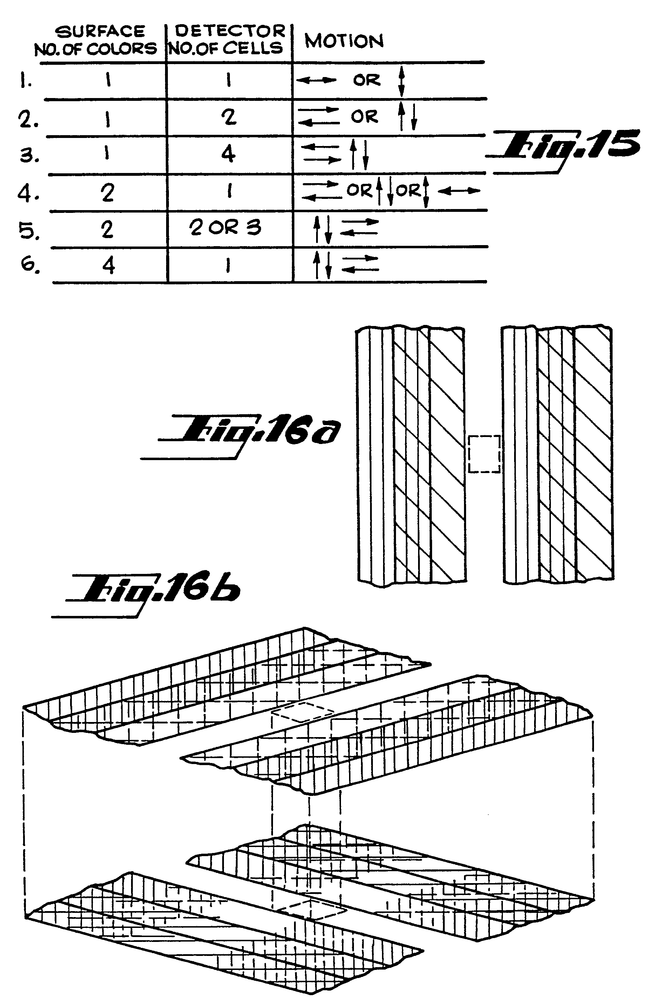

Fig. 15 is a table showing how the number of colours in the line pattern of the surface may vary in accord with the number of cells in a detector, together with motion states that can be detected;

Fig. 16a is a plan view of a portion of a grid pattern for use in an alternate embodiment of the present invention wherein grid lines overlap by one-half of a line width; and

Fig. 16b is a line pattern similar to the one shown in Fig. 16a, except that two sets of mutually orthogonal lines are shown, each set having lines of two colours overlapping by half a line width.

Figs. 1 and 2 show two assemblies used in the embodiment of the invention. A first assembly is the movable detector means 11. This detector means includes a housing 14 containing a two colour light source 15 as well as a photodetector 25. The two colour light source 15 may be either two physically separate LEDs or two incandescent bulbs provided with colour filters. A typical two-colour LED is General Instruments MV5491. The preferred colours are red and infra-red. The housing is gripped by a human hand and pushed in any direction on the surface, corresponding to the direction and extent to which it is desired to move a cursor, or similar device.

Source 15 may be seen to be mounted within a light-tight tube 17 which is aimed downwardly at a spot on surface 13. Tube 17 has a forward light aperture 19 where focused light emerges for illuminating an area slightly larger than one of the squares of the surface, to be described below.

Also mounted in housing 14 is a detector tube 21 having at its forward end an imaging lens 23 which is a glass bead. Lens 23 is mounted so that it is slightly more than one focal length from surface 13. The remainder of tube 21 is generally light tight. At the rear of tube 21 is a four-quadrant detector 25 which receives a magnified image of surface 13 via the imaging lens 23. The spacing between the four-quadrant detector 25 and lens 23 is one wherein the four-quadrant detector is about eight focal lengths from lens 23. The distance is typically about 3 cm, but could be more or less. The diameter of the bead forming imaging lens 23 is approximately 3 or 4 mm, but could be more or less. Where the LED has a wide angle lens, the LED should be mounted close to the surface 13 so that light arriving at the surface will be a relatively narrow spot, i.e. a spot with a diameter of less than 1.0 mm.

In Fig. 2, housing 14 is seen to include a planar central shelf 27 through which tube and detector 21 extend angularly downward and are held in place therein. While specular reflection between the source and detector is preferred, it is not necessary since diffuse reflection is adequate. Housing 14 has thin, low-friction spacers 31 and 33 which make contact with surface 13. Spacers 31 and 33 may be made of Teflon or nylon so that the housing slides easily over the surface. Each of the detectors of the four quadrant detector is independent of all the others. When placing the housing on surface 13, alignment should be such that the square formed by the four-quadrant detectors is aligned with squares of the surface. However, the housing may be rotated up to 45° in either direction from this nominal orientation without affecting the decoded signal.

The mouse system generates signals which electrically communicate with a cursor or the like regarding movement up or down, left or right. There is no particular starting place for the housing on the surface. It may be brought down any place on the surface, so long as there is sufficient room to move the housing in a direction wherein cursor motion is desired. A preferable size for the housing is approximately 6 cm in width and approximately 8 cm in length. A preferred size for the surface would be approximately 22 cm in width and approximately 30 cm in length. These dimensions are not critical and the housing or surface may be larger or smaller, as needed.

A second assembly is a surface 113, a magnified tiny portion, corresponding to portion 13 in Fig. 1, being illustrated in Fig. 6. This surface has a passive, position-related array of two groups of lines. A first group of lines is characterized by reflection of one colour of light and absorption of a second colour of light. A second group of lines is characterized by reflection of the second colour and absorption of the first colour. For example, one colour may be red and the other green. The surface would have one group of lines, for example vertical lines which would be coloured green and a second group of lines, such as horizontal lines, which would be red. In general, the green lines would reflect green light and absorb red light, while the red lines would reflect red light and absorb green light. The lines are drawn with inks of the desired optical property. Colour should be uniform. The *space* between lines should be *white*, metallic-reflective or otherwise highly reflective such that a sufficient contrast ratio exists between lines and spaces. The preferred line pattern is a grid of blue horizontal lines and green vertical lines printed on white paper. The line pattern need not be a square grid, although this is easy to handle for computation purposes. Other repetitive line patterns, having position-related geometry, such as concentric circles, may be used. In Fig. 6, a partial grid pattern may be seen, with orthogonal dual colour lines (colour not shown) and white spaces between lines.

In Fig. 6 the dashed lines 126 indicate the relative area within a grid which forms the field of view of the detector relative to a grid of lines and in particular to the width of a line. This is the same area imaged by the lens of the detector tube onto the detector array, such that each detector cell is capable of resolving or "seeing" the width of a line. This would not be possible if, for example, the size of the rectangle indicated by the dashed lines 126 were equal to the size of two grid spaces. Vertical lines 127 and 129 have a width approximately equal to grid space 128. Typically, the line width would be 0.5 mm. Where four detector cells are used these are arranged to form four quadrants of a square and may be conveniently numbered as 1, 2, 3 and 4 starting from the top left hand corner of the square and progressing in a clockwise direction. For vertical lines, horizontally adjacent detector cells 1 and 2 must both be able to simultaneously observe the line, deriving HA and HB signals. Correspondingly, for horizontal lines 131 and 133, vertically adjacent cells 2 and 3 must both be able to simultaneously observe the lines so that VA and VB signals can be generated.

In producing the line pattern of Fig. 6, the entire surface starts as a reflective area. The inks or dyes used to print the lines shown in Fig. 6 are preferably transparent. Since any light reaching the detector is reflected from the underlying reflective surface, the underlying surface must have good reflectivity. Glossy white paper is adequate. Mylar may also be used. In the case where non-transparent inks or dyes are used for the lines, a problem will occur at line intersections where only the line printed last will be visible. To overcome this situation, the intersections must be made absorptive, i.e. dark, to both colours of light. This may require printing of intersections with a third, dark colour, non-transparent ink or dye. In the situation where transparent dyes are used, the two colours are sufficient and a third colour is not used. In Fig. 6, the dark or black line intersections do not necessarily represent a third colour, but merely a light-absorptive region.

The desired output from the detectors is taken from three of the four cells, two horizontal bits from two horizontal cells and two vertical bits from two vertical cells. For example, HA and HB would be taken from horizontally adjacent cells 1 and 2 while VA and VB would be taken from vertically adjacent cells 3 and 2 respectively. A fourth cell 4 making up the square with the other three cells would not be used.

In the present invention, the LED source is capable of producing the two colours previously mentioned. At the time vertical lines appear at the detector, for example green illumination, the states of the horizontally arranged cells 1 and 2 would be saved. At the time horizontal lines appear, for example under red illumination, the states of the vertically arranged cells 2 and 3 are saved. Alternatively the horizontal saved cells could be 3 and 4, whilst the vertical saved cells could be 1 and 4. These saved states are compared with the last saved state to determine the direction of motion as previously discussed. The direction of a line crossing depends on the order of cell transitions. This is the reason that two cells are required for each of vertical and horizontal motions.

With reference to Fig. 4, a circuit for driving the light source is illustrated. The two colours of the LED can be supplied in the single package in a variety of ways, such as common anode, common cathode, or back-to-back diodes. The arrangement is indicated schematically with the diode 142 indicating a source of one colour and the diode 144 indicating the source of another colour. The anodes of each diode are connected to a common D.C. potential at terminal 146 which would typically be approximately 5 volts. The cathode of diode 142 is connected to a resistor 143, while the cathode of diode 144 is connected to resistor 145. Each of the diodes is driven by a square-wave clock signal applied at terminal 147. Such a clock signal can be derived from a computer or other clock source. The clock frequency should be above 3 kHz. The clock signal for diode 142 is transmitted through inverter 151, while the clock signal for diode 144 is transmitted through inverters 152 and 153 in series, so that the phase of the clock signal across diode 142 is opposite diode 144, i.e. a bi-phase signal. In this manner, the diodes will conduct on alternate half-clock cycles. This creates sequential two-colour illumination of the lines within the field of view of the detector.

In Fig. 5, the detector cell array 135 is seen to be connected to quad comparator circuit 136, which includes individual comparators 137, 138, 139 and 140. Each comparator receives a common reference signal from a voltage souce, termed $V_{THRESHOLD}$. The output of each of the comparators does not switch until the threshold voltage is crossed in either direction. Once such a crossing occurs, the output of a comparator where such a crossing occurs changes state and such a state is latched by latch circuit 160. The threshold is crossed only when there is a significant change in contrast observed by the detector cells. For example, in counting vertical lines (green) to measure horizontal mouse travel, the detector would see reflective spaces between vertical lines. When crossing vertical lines, the green lines appear absorptive or dark under red light. The change in detector output signal occurring during the transition from the reflective condition to the absorptive condition crosses the $V_{THRESHOLD}$ level, switching the comparator state. Note that comparator 139 is not necessary since the output of this comparator can be taken from comparator 138. Hence, if an open collector clock signal is supplied from a computer, comparator 139 can be used to invert the clock signal. Hence, the inverter package is unnecessary.

If the amplified detector signal swing between dark and light areas exceeds 2 volts, quad comparator circuit 136 may be wired as a set of transimpedance amplifiers to directly drive TTL inputs.

Latch circuit 160 has latches 161, 163, 165 and 167 corresponding to electrically connected comparator output lines. The outputs from comparators 137 and 138 are seen to be the horizontal outputs HA and HB, respectively. The outputs from comparators 139 and 140 are seen to be the vertical outputs VB and VA, respectively. The latch circuits are clocked at clock terminals 171 and 173. Alternate half-cycles, i.e. out of phase, are applied to terminals 171 and 173 so that on one-half-cycle, HA and HB are gated into the latches, while on the alternate half cycle VA and VB are gated in. The latched signals, indicative of line crossings, are transmitted to the counters 175 which are commercially available. Computers which directly accept the output of the counters have been mentioned supra. These computers are known to accept a code from many mechanical mice and the present code is identical to that produced by such mice. The output from the counters 175 is then fed to a cursor which is displayed on a video display or video terminal.

In Fig. 5 it will be noted that only three of the four cells of the four-quadrant photodetector 135 have been utilized. It is possible to carry out this embodiment with a two-cell detector, such as detector 210 of Fig. 7. This detector has detector cell 212, producing HB and VB signals on alternate clock cycles and detector cell 214 producing HA and VA signals on alternate cycles. It should be noted that this cell array must be oriented at 45° to the lines of the grid pattern. The detector field of view is indicated schematically by the dashed lines 220 in Fig. 8. The vertical lines 222 are of one colour, while the horizontal lines 224 are of another colour the two colours being resolvable by the detector in the time-gating manner previously described. In contrast to the detectors in Figs. 5 and 9, which can be rotated 90° in either direction with no effect, the detector of Fig. 7 can only be rotated by 45° in either direction, without affecting operation. The detectors are time gated at the clock frequency previously mentioned, i.e. above 3 kHz. Time gating of the detector allows each detector cell to be shared by one of the colours for producing both a horizontal and a vertical output.

For interfacing the equipment with a microprocessor (e.g. many modern keyboards) the two or three outputs of the quad comparator circuit 136 can be directly connected to the microcomputer chip which can be programmed to produce X and Y information on request. The microprocessor can also supply the clock signal for the LED. Examples of common microprocessors include the Intel 8048 and Motorola 6801. Such microprocessors may be used in lieu of discrete logic circuits in all cases.

Fig. 9 shows a slightly modified four-cell detector 211 having four cells 213, 215, 217 and 219. The array is arranged so that the cells are at a 45° angle to the grid pattern on the surface, such as the surface of Fig. 6. The dashed lines 221 of Fig. 10 indicate detector orientation with respect to the grid pattern, a portion of which is indicated by lines 223 and 225. Cells 213 and 217 are sensitive to one colour or light, while cells 215 and 219 are sensitive to the second colour of light. Sensitivity may be described by placing filters in front of the detector elements. These filters may be produced by printing on clear stock with the same ink as is used to print the surface 13. Cells 213 and 217 produce VB and VA signals respectively, while cells 215 and 219 produce signals HB and HA respectively. The 45° orientation with respect to the grid pattern would permit use of an incandescent source or LEDs of the two corresponding colours which are on continuously. Time gating of the sources or the detectors would not be required. However the assembly is more complex since it is necessary to cut and align filter patterns over the photosensitive detectors. Since time gating is not required, ambient light, such as room light, could be used as the source. Hence, it will be realized that while light sources are preferable, in some instances pre-existing sources can be used. It should also be realized that the surfaces in both embodiments can be backlit, thereby eliminating the need for a source within the detector housing. The housing illustrated in Figs. 1, 2 and 3 is arbitrary. A light pen type of housing, as illustrated in U.S. patent 3,182,291 could also be used. The patent shows a four-cell detector with a compact source passing through the centre of the cell array, using fibre optic cable. In some instances, such a housing might be preferable to the housing illustrated in Figs. 1, 2 and 3.

With regard to light sources, two sources may be provided which are on continuously. Two two-segment detectors are used, each focused at a different point on the surface, as shown in Fig. 3 except that each detector is illuminated by only a single colour LED (or incandescent bulb with a filter). Each detector would have only two active cells. One detector would have two cells aligned for HA and HB detection, while the other detector would have orthogonal cells for VA and VB detection.

Fig. 11 shows an alternate construction for the mouse housing of the present invention. The housing 231 is a hand-held telescope which views a mouse surface 233 remotely, i.e. from a distance equal to a telescopic focal length. The field of the telescope is sufficiently small or the markings are sufficiently spaced apart relative to the telescope detector field of view such that lines of the surface can be adequately resolved. The surface may be any of the surfaces described in this patent application providing an appropriate detector is used. Telescope 231 may have an eyepiece 235 as well as a multi-cell detector 237, arranged at right angles to the eyepiece 235 and sharing collected light by means of a beam splitter 239. The telescope may be moved in an arc as indicated by the arrows A and B, or laterally translated parallel to the plane of surface 233. Other housings, such as light pens or wands may also be used. The housing may have switches, or a keyboard, for signalling a connected microprocessor.

In this embodiment, the lines and sources have been referred to as red and green lines. The lines are not restricted to these colours. As previously mentioned, colours which are reflective or absorptive of red and infra-red are preferred.

It should be noted that in the present invention diagonal motion of the mouse detector is not a problem because horizontal and vertical motions are completely orthogonal and separately reported.

The mouse housing shown in Fig. 1 has only one source and detector. However, the light source and detectors are so small and non-interacting that two pairs of sources and detectors can be accommodated in the same housing, as in Fig. 3. This Figure shows two sources 91 and 92 spaced from each other and from two detectors 93 and 94. The construction of the sources and detectors is as described with reference to Figs. 1 and 2. By spacing these at a distance, the electrical circuits described herein can be duplicated so that the X, Y motion of two points or spots whose distance from each other is fixed can be determined. By knowing the relative X, Y motion of the two points, it is easy to determine the rotational orientation of the mouse so that both translation and rotation of the mouse may be noted.

For example, once two mouse positions are defined, say $(X_1 \ Y_1)$ and $(X_2 \ Y_2)$, the rotational angle $(\theta)$ of the mouse is:

$$\theta = \text{arc tan} \left( \frac{Y_2 - Y_1}{X_2 - X_1} \right)$$

Of course, the separation of the focal spots must be fixed and known so that angular changes can be computed using the above formula.

With reference to Fig. 12 a plan view of a slightly different mouse adapted for rotation as well as translation is illustrated. However only one detector is required. Two sources 191 and 192 are arranged as in Fig. 3. The two sources are arranged so that the clocking of each is out of phase with the clocking of the other. For example, the clocking of source 191 is illustrated in Fig. 13, while the clocking of source 192 is illustrated in Fig. 14. It will be noted that when source 191 is on in the interval between 0 and T, source 192 is off. On the other hand, while source 192 is on during the interval between T and 2T, source 191 is off. Each of the sources alternates in colour during its time slot unless a four-quadrant filtered detector is used. Both the sources and the detector cells are clocked using the same clock, with an on-board flip-flop to switch sources. The sources and detector cells are indicated schematically with reference to the surface 191 and focusing optics 197. The orientation of detector 151 depends on the particular non-rotatable embodiment used. Furthermore, the detector means could be fixed and the surface placed on the bottom of a hand-held housing. In this case, the mouse mimics the behaviour of mechanical mice; only hand motion relative to the housing axes is detected.

It will be realized by those skilled in the art that variations of the systems described herein are possible. For example, while this application has described the advantage of using a multi-cell detector for detecting multiple colours, such a multi-cell detector is not necessary if the number of colours in the colour pattern of a surface is exchanged for the number of cells in the detector. The table of Fig. 15 illustrates the types of motions which can be detected with different combinations of colours and cells. A doubleheaded arrow indicates motion in either direction indicated by the arrowheads. A single-headed arrow indicates motion only in the direction indicated by the arrow. For example, the first line of the table in Fig. 15 indicates that a single-cell detector and a line pattern of a single colour can be used to detect motion in one line, but the direction of motion along that line cannot be unambiguously determined. The second line of the table indicates that by adding another cell to the detector, the direction of motion along a line can be unambiguously determined. The third line corresponds to a checkerboard grid pattern wherein motion in two directions can be determined. The fourth line of the table indicates that by use of two colours and a single cell, motion can be detected unambiguously in one direction, using the line pattern indicated in Fig. 16a. Note that the dashed lines in Fig. 16a indicate the field of view of the detector cell. The two colours are indicated by hatched lines. Note that the lines overlap. The pattern of Fig. 16a is provided by printing lines in one colour and then printing another colour of the same pattern displaced from the first pattern by half a line width. Hence, when the detected illumination colour changes, the line pattern seems to shift. This shifting line pattern is functionally equivalent to having a single colour and a two-cell detector. The lines could also be orthogonal to each other which allows two-dimensional motion sensing. The fifth line of the table is exemplified by the embodiment of the invention described with reference to Figs. 7 to 10. The sixth line of the table represents a line pattern wherein two sets of lines, each set identical to Fig. 16a are superimposed on top of each other in an orthogonal relationship, as shown in Fig. 16b. In other words, four colours are used, with two colours to print the horizontal pattern and the other two colours used for the vertical pattern, as in Fig. 16b. The colours of the first set of lines are selected as described above. The second set of lines has a second set of colours, different from the first set, but selected in the same way as the first set. With this pattern, a single cell can detect unambiguous motion in the direction of the line patterns.

Lastly, it will be realized that the mouse of the present invention need not be used only to control a cursor. Rather, the signals derived from the mouse system may be used to control servos for pointing various members. The motion which is sensed by the present invention is the relative motion between the detector means and the surface and is somewhat independent of the orientation of the detector means housing. However, the orientation of the housing relative to the surface may be found by using two detector means.

## Claims

1. A relative motion sensing system of the type having a surface (13), with a pattern of intersecting passive position-related lines thereon, and a member (11) movable over the surface, said surface having thereon a first group of parallel lines which reflect one colour and absorb a second colour and a second group of parallel lines which reflect the second colour and absorb the first colour; a detector means housed in the movable member and comprising light source means (15) directed at the surface (13), emitting light of said first and second colours, and light detector means (25) positioned for receiving light reflected from the surface (13), the detector having a plurality of detector cells and producing electrical output signals representing reflection from lines in said first and second groups of lines; and counter means (175) for counting said electrical output signals; characterised in that said first group of lines includes spaced apart lines (127, 129) of the first colour orthogonally intersected by spaced apart lines (131, 133) of the second colour constituting said second group, the spacing of said lines in said first and second groups being equal to the width of said lines, such that intersections of the lines, intersections of the spaces with the lines and remaining spaces are all optically contrasting horizontally and vertically adjacent squares (128) of identical dimensions formed on said surface (13) in order to form a repetitive pattern, the pattern repeating after crossing two squares in either the horizontal or vertical direction; and in that at least two detector cells are provided in order to detect relative motion in each direction.

2. A relative motion sensing system according to claim 1, wherein there are four detector cells (1, 2, 3, 4) arranged in four quadrants of a square (135).

3. A relative motion sensing system according to claim 1, wherein there are four detector cells (213, 215, 217, 219) arranged in four quadrants of a square (221), the square being at 45° to the grid pattern of lines.

4. A relative motion sensing system according to any one of the preceding claims, wherein the squares each have a side dimension of less than 1.0 mm.

5. A relative motion sensing system according to claim 2, wherein the output from one of the detector cells (2) is connected in common to the first inputs of a pair of comparators (138, 139), the output from two of the other detector cells (1, 3) being connected to the first inputs of respective comparators (137, 140), the fourth detector cell remaining unconnected, the second input of each comparator being connected in common to a threshold voltage input.

## Patentansprüche

1. Relativbewegungserfassungssystem der Art mit einer Oberfläche (13), worauf sich ein Muster von sich schneidenden passiven positionsbezogenen Linien befindet, und einem über die Oberfläche bewegbaren Organ (11), wobei die Oberfläche eine erste Gruppe paralleler Linien, die eine Farbe reflektieren und eine zweite Farbe absorbieren, und eine zweite Gruppe paralleler Linien, die die zweite Farbe reflektieren und die erste Farbe absorbieren, aufweist; einem im beweglichen Organ untergebrachten Detektorelement, das ein Lichtquellenelement (15), das auf die Oberfläche (13) gerichtet ist und Licht der ersten und zweiten Farbe emittiert, und ein Lichtdetektorelement (25), das so positioniert ist, daß es von der Oberfläche (13) reflektiertes Licht aufnimmt, umfaßt, wobei der Detektor eine Vielzahl von Detektorzellen aufweist und elektrische Ausgangssignale erzeugt, die die Reflexion von Linien in der ersten und zweiten Gruppe von Linien darstellt; und einem Zählelement (75) zum Zählen der elektrischen Ausgangssignale, dadurch gekennzeichnet, daß die erste Gruppe von Linien sich im Abstand voneinander befindliche Linien (127, 129) der ersten Farbe einschließt, die orthogonisch durch sich im Abstand voneinander befindliche Linien (131, 133) der zweiten, die zweite Gruppe bildenden Farbe geschnitten werden, wobei der Abstand der Linien in der ersten und zweiten Gruppe gleich der Breite der Linien ist, so daß Schnittpunkte der Linien, Schnittpunkte der Zwischenräume mit den Linien und restliche Zwischenräume sämtlich optisch kontrastierende, horizontal und vertikal benachbarte, auf der Oberfläche (13) gebildete Quadrate (128) gleicher Abmessungen sind, um ein sich wiederholendes Muster zu bilden, wobei sich das Muster nach dem Kreuzen von zwei Quadraten in entweder horizontaler oder vertikaler Richtung wiederholt; und daß zumindest zwei Detektorzellen vorgesehen sind, um Relativbewegung in jede Richtung festzustellen.

2. Relativbewegungserfassungssystem nach Anspruch 1, worin vier Detektorzellen (1, 2, 3, 4) in vier Quadranten eines Quadrats (135) angeordnet sind.

3. Relativbewegungserfassungssystem nach Anspruch 1, worin vier Detektorzellen (213, 215, 217, 219) in vier Quadranten eines Quadrats (221) angeordnet sind, wobei das Quadrat in einem Winkel von 45° zum Liniengittermuster liegt.

4. Relativbewegungserfassungssystem nach einem der vorstehenden Ansprüche, worin die Quadrate jeweils ein Seitenmaß von weniger als 1,0 mm haben.

5. Relativbewegungserfassungssystem nach Anspruch 2, worin der Ausgang von einer der Detektorzellen (2) gemeinsam mit den ersten Eingängen eines Paars Komparatoren (138, 139) verbunden ist, wobei der Ausgang von zwei der anderen Detektorzellen (1, 3) mit den ersten Eingängen entsprechender Komparatoren (137, 140) verbunden ist und die vierte Detektorzelle unverbunden bleibt, wobei der zweite Eingang jedes Komparators gemeinsam mit einem Schwellenspannungseingang verbunden ist.

**Revendications**

1. Un système de détection de mouvement relatif du type comportant une surface (13), sur laquelle est disposée une configuration de lignes passives se coupant et liées en position, et un élément (11) mobile sur la surface, ladite surface comportant un premier groupe de lignes parallèles qui réfléchissent une couleur et absorbent une seconde couleur ainsi qu'un second groupe de lignes parallèles qui réfléchissent la seconde couleur et absorbent la première couleur; un moyen détecteur logé dans l'élément mobile et comprenant une source de lumière (15) dirigée vers la surface (13) et émettant une lumière desdites première et seconde couleurs, ainsi qu'un moyen détecteur de lumière (25) positionné de façon à recevoir de la lumière réfléchie par la surface (13), le détecteur comportant une pluralité de cellules de détection et produisant des signaux électriques de sortie représentant une réflexion à partir de lignes desdits premier et second groupes de lignes; et un compteur (175) pour compter lesdits signaux électriques de sortie; caractérisé en ce que ledit premier groupe de lignes comprend des lignes (127, 129) de la première couleur, espacées l'une de l'autre et coupées orthogonalement par des lignes (131, 133) de la seconde couleur, espacées l'une de l'autre et constituant ledit second groupe, l'espacement desdites lignes dans lesdits premier et second groupes étant égal à la largeur desdites lignes, de telle sorte que des intersections des lignes, des intersections des espaces avec les lignes et des espaces restants soient tous des carrés (128) horizontalement et verticalement adjacents, en contraste optique, ayant des dimensions identiques et formés sur ladite surface (13) afin de créer une configuration répétitive, la configuration se répétant après croisement de deux carrés dans la direction soit horizontale soit verticale; et en ce qu'au moins deux cellules de détection sont prévues pour détecter un mouvement relatif dans chaque direction.

2. Un système de détection de mouvement relatif selon la revendication 1, dans lequel il est prévu quatre cellules de détection (1, 2, 3, 4) disposées dans quatre quadrants d'un carré (135).

3. Un système de détection de mouvement relatif selon la revendication 1, dans lequel il est prévu quatre cellules de détection (213, 215, 217, 219) disposées dans quatre quadrants d'un carré (221), le carré étant orienté à 45° par rapport à la configuration de lignes croisées.

4. Un système de détection de mouvement relatif selon une quelconque des revendications précédentes, dans lequel les carrés ont chacun une dimension de côté inférieure à 1,0 mm.

5. Un système de détection de mouvement relatif selon la revendication 2, dans lequel la sortie d'une des cellules de détection (2) est reliée en commun aux premières entrées d'une paire de comparateurs (138, 139), la sortie de deux des autres cellules de détection (1, 3) étant reliée aux premières entrées de comparateurs respectifs (137, 140), la quatrième cellule de détection restant non connectée et la seconde entrée de chaque comparateur étant connectée en commun à une entrée de tension de seuil.

Fig.1

Fig.3

Fig.2

Fig. 4

Fig. 5

*Fig. 6*

*Fig. 7*

*Fig. 8*

*Fig. 9*

*Fig. 10*

*Fig. 11*

*Fig. 13*

*Fig. 12*

*Fig. 14*

EP 0 078 809 B1

| | SURFACE NO. OF COLORS | DETECTOR NO. OF CELLS | MOTION |
|---|---|---|---|
| 1. | 1 | 1 | ↔ OR ↕ |
| 2. | 1 | 2 | ⇄ OR ↕ |
| 3. | 1 | 4 | ⇄ ↕ |
| 4. | 2 | 1 | ⇄ OR ↕ OR ↔ |
| 5. | 2 | 2 OR 3 | ↕ ⇄ |
| 6. | 4 | 1 | ↕ ⇄ |

**Fig.15**

**Fig.16a**

**Fig.16b**

4